# FASCICULE DE BREVET EUROPEEN

(11) **EP 2 702 630 B1**
(45) Date de publication et mention de la délivrance du brevet: **08.04.2015**
(21) Numéro de dépôt: 12716427.5
(22) Date de dépôt: 25.04.2012
(51) Int. Cl.: H01M 10/0525, H01M 2/16, H01M 4/58, H01M 4/485, H01M 10/0583, H01M 4/66

(54) **ACCUMULATEUR ELECTROCHIMIQUE LI-ION DE TYPE BIPOLAIRE A CAPACITE AUGMENTEE**
BIPOLARE ELEKTROCHEMISCHE LI-IONENBATTERIE MIT ERHÖHTER KAPAZITÄT
BIPOLAR ELECTROCHEMICAL LI-ION BATTERY HAVING INCREASED CAPACITY

(30) Priorité: 26.04.2011 FR 1153564
(43) Date de publication de la demande: 05.03.2014
(73) Titulaire: Commissariat à l'Énergie Atomique et aux Énergies Alternatives, 75015 Paris (FR)
(72) Inventeur: CHAMI, Marianne, F-38600 Fontaine (FR)
(74) Mandataire: Ahner, Philippe
(86) Numéro de dépôt international: PCT/EP2012/057498
(87) Numéro de publication internationale: WO 2012/146589

(56) Documents cités:
- US-A- 4 029 855

## Description

### DOMAINE TECHNIQUE

La présente invention concerne le domaine des générateurs électrochimiques au lithium, qui fonctionnent selon le principe d'insertion ou de désinsertion, ou autrement dit intercalation-désintercalation, de lithium dans au moins une électrode.

Elle concerne plus particulièrement un accumulateur électrochimique Lithium-ion (Li-ion en abrégé) de type bipolaire comportant au moins un collecteur de courant à fonction bipolaire.

Usuellement, dans un tel accumulateur, l'architecture est dite bipolaire car le collecteur ou électrode appelé(e) bipolaire désigne un substrat conducteur électrique comprenant deux faces opposées dont une sur laquelle est déposée une couche active de matériau d'électrode positive et l'autre sur laquelle est déposée une couche active de matériau d'électrode négative.

L'invention vise à augmenter la capacité (en ampère heure ou en Ah en abrégé) d'un accumulateur bipolaire Li-ion ou d'une batterie bipolaire Li-ion constituée par assemblage d'accumulateurs Li-ion bipolaires.

### ART ANTÉRIEUR

L'architecture des batteries Li-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733 ;
- une géométrie en empilement telle que divulguée dans les demandes de brevet US 2008/060189, US 2008/0057392, et brevet US 7335448.

Une architecture monopolaire est réalisée par bobinage. Le bobinage est constitué d'un collecteur de courant sur lequel est déposé en continu un matériau d'électrode positive (cathode), un séparateur en matériau polymère ou céramique venant s'intercaler à un matériau d'électrode négative (anode) lui même déposé sur un autre collecteur de courant. Cette architecture monopolaire a comme avantage principal d'avoir une grande surface active de matériau mais la différence de potentiel est restreinte à la valeur unitaire de la différence de potentiel entre les deux matériaux d'électrode utilisés, ce qui est également le cas de la géométrie en empilement.

L'énergie (en Watt heure ou Wh en abrégé) d'une cellule Li-ion est proportionnelle à la fois à sa tension (en Volt ou en V en abrégé) et à sa capacité.

En ce qui concerne la tension d'une cellule, elle correspond généralement à celle du couple électrochimique d'anode/cathode qui la constitue. Typiquement, pour un couple à anode en Li₄Ti₅0₁₂ et cathode en LiFePO₄ la tension nominale est de 1.88V.

En ce qui concerne la capacité d'une cellule, celle-ci dépend de la surface et de l'épaisseur des électrodes employées. Ainsi, pour augmenter la capacité d'une cellule, il est usuel d'augmenter le grammage des électrodes et/ou la surface des électrodes. Une augmentation trop importante du grammage des électrodes ne peut être envisagée pour une application dite « de puissance » en fonctionnement de la cellule.

C'est d'ailleurs le paramètre retenu par les fabricants de batteries Li-ion pour faire leur distinction :
- celles dites « de puissance » comprenant des cellules Li-ion avec électrodes ayant un faible grammage, typiquement inférieur à 1 mAh/cm². L'énergie nécessaire pour l'application de puissance visée est alors apportée par des grandes surfaces d'électrodes qui sont souvent réalisées par bobinage (bobinage prismatique ou cylindrique) ;
- celles dites « d'énergie » comprenant des cellules Li-ion avec électrodes ayant un fort grammage, typiquement supérieur ou égal à 1 mAh/cm². L'énergie nécessaire pour l'application d'énergie visée peut être augmentée également en employant des grandes surfaces d'électrodes qui peuvent être réalisées par bobinage (bobinage prismatique ou cylindrique).

Afin d'augmenter le potentiel moyen d'un accumulateur (cellule) Li-ion monopolaire tout en conservant une densité d'énergie comparable, il est connu de réaliser une batterie avec une pluralité de cellules électrochimiques en série. L'architecture de la batterie est ainsi qualifiée de bipolaire car elle comprend une électrode d'une cellule et une électrode d'une cellule adjacente qui sont supportées sur un même collecteur de courant sous forme d'une plaque, qualifié lui-même d'électrode bipolaire. L'architecture d'une batterie bipolaire correspond ainsi à la mise en série de plusieurs accumulateurs monopolaires par l'intermédiaire des électrodes ou collecteurs de courant bipolaires, avec toutefois l'avantage d'avoir une résistance électrique réduite par rapport à des accumulateurs monopolaires reliés en série par des connecteurs extérieurs. On peut citer ici de nombreux demandes de brevets ou brevets concernant de telles batteries bipolaires, tels que US 7279248, US 7220516, US 7320846, US 7163765, WO 03/047021, WO 2006/061696, US 7097937 ou encore US 4029855. Dans toutes ces batteries bipolaires, le collecteur de courant bipolaire supporte sur une face une électrode positive d'une cellule et sur son autre face opposée une électrode négative d'une cellule adjacente.

Les architectures bipolaires généralement utilisées sont de type à empilement. On a représenté une batterie bipolaire Li-ion selon l'état de l'art en figure 1, telle qu'elle est illustrée dans la demande de brevet WO 03/047021.

Cette batterie comporte en partie supérieure un substrat conducteur en aluminium 13 (collecteur de courant terminal positif) et une couche active 14 à base de matériau d'insertion au lithium positif, tel que du Li_{1.04}Mn_{1.96}O₄ et en partie inférieure un substrat conducteur en aluminium 21 (collecteur de courant terminal négatif) et une couche active 20 à base de matériau d'insertion au lithium positif, tel que du Li₄Ti₅O₁₂.

Au sein de cette batterie, une électrode bipolaire 1, aussi appelée collecteur de courant bipolaire, comprend une couche active positive 18 et une couche active négative 19 de part et d'autre d'un substrat conducteur en aluminium 17 sous la forme d'une plaque.

Les électrodes inférieure 20 et supérieure 14 sont séparées de l'électrode bipolaire 1 par deux séparateurs 15, 19 dans lequel un électrolyte est présent sous forme liquide ou de gel. L'étanchéité aux électrolytes de la batterie entre les deux cellules électrochimiques adjacentes constituées 14, 15, 16 et 18, 19, 20 est assurée par un joint 22 qui est réalisé par un dépôt de résine ou de colle sur la périphérie de toutes les électrodes et la plaque 17.

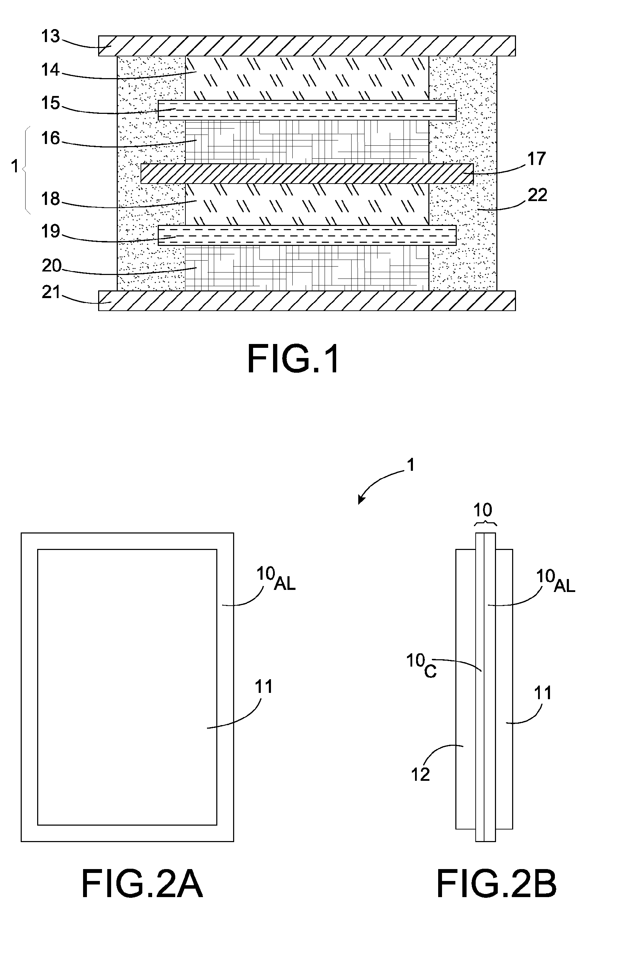

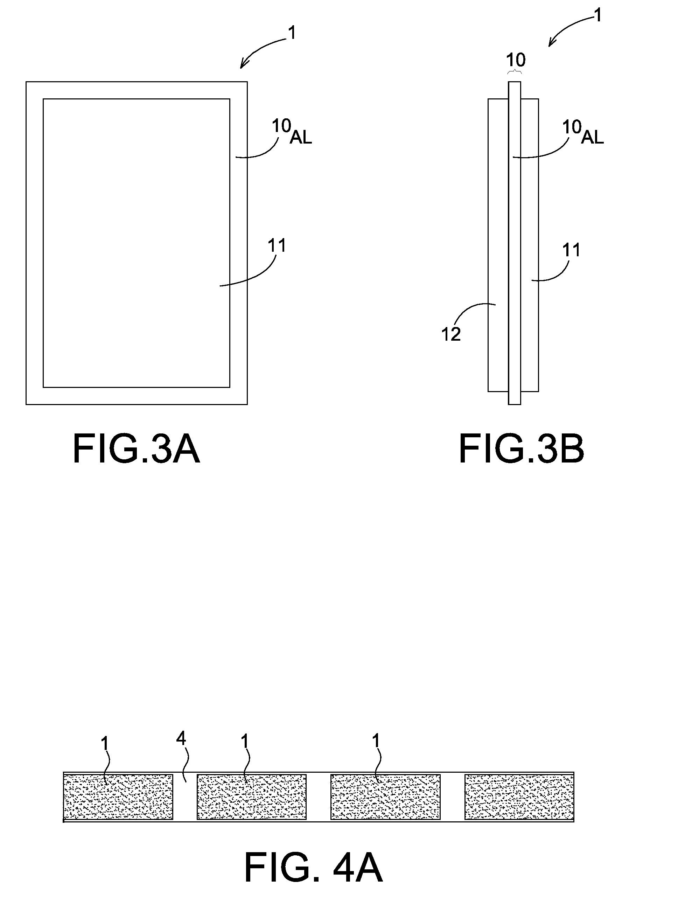

Un collecteur de courant bipolaire 10 ou 17 selon l'état de l'art est, en fonction des matériaux d'insertion aux ions lithium employés pour la réalisation des électrodes :
- soit constitué de deux plaques superposées, dont l'une typiquement en aluminium 10AL est recouverte par une cathode 11 et l'autre typiquement en cuivre 10C est recouverte par une anode 12 (figures 2A et 2B),
- soit constitué d'une seule plaque typiquement en aluminium 10AL recouverte sur une des faces par une cathode 11 et sur l'autre de ses faces par une anode 12 (figures 3A et 3B).

La tension globale d'une batterie bipolaire peut être aisément augmentée en empilant un nombre de compartiments électrochimiques plus important. Le principal inconvénient d'un empilement d'un nombre de compartiments trop important est que cela peut conduire à un dysfonctionnement de la batterie bipolaire. En effet, l'empilement nécessite l'utilisation de moyens de serrage de part et d'autre afin de réaliser un bon contact mécanique sur toute leur surface des éléments les uns par rapport aux autres, c'est-à-dire s'assurer d'un bon contact de l'électrolyte avec les électrodes positive, négative et le séparateur pour obtenir un bon fonctionnement de chacune des cellules. De tels moyens de serrage sont par exemple décrits dans le brevet US 5595839.

Autrement dit, pour augmenter encore l'énergie de batteries Li-ion bipolaires, il faudrait augmenter leur capacité.

Pour ce faire, quelques brevets, tels que JP 3419311 B2, mentionnent l'idée séduisante de pouvoir bobiner une cellule bipolaire. Mais cette perspective reste en pratique difficilement réalisable par la conception même des cellules bipolaires. En effet, comme décrit pour l'architecture selon l'état de l'art (figure 1), la réalisation des cellules bipolaires implique l'agencement à la périphérie du collecteur bipolaire, respectivement des électrodes, d'un cadre nu sur lequel est déposée une résine ou colle pour constituer un joint d'étanchéité étanche à l'électrolyte liquide. Cet agencement diminue très fortement la flexibilité des cellules bipolaires et empêche concrètement de bobiner les électrodes.

Par ailleurs, la demanderesse a proposé, dans la demande de brevet déposée sous le N°FR 10 50230, une autre solution consistant à mettre en série ou en parallèle des éléments de type « énergie » (électrodes à fort grammage) et des éléments de type « puissance » (électrodes à faible grammage).

Le but de l'invention est alors de proposer une nouvelle solution qui permet d'augmenter la capacité de cellules (accumulateurs) Li-ion de type bipolaire.

### EXPOSÉ DE L'INVENTION

Pour ce faire, l'invention a pour objet un accumulateur électrochimique Li-ion de type bipolaire, comprenant au moins deux compartiments électrochimiques agencés adjacents entre eux en étant en série électrique, chacun des compartiments comprenant :
- au moins un premier substrat électriquement conducteur formant collecteur de courant comprenant deux faces, dont une première face supporte une électrode selon au moins un motif et la deuxième face supporte une électrode selon deux motifs distants l'un de l'autre en définissant une zone dépourvue de motifs, l'un des deux motifs de la deuxième face étant supporté dans une même zone que le motif de la première face, le premier substrat étant plié sur lui-même au niveau de la zone dépourvue de motifs de sorte à avoir une forme de U avec un motif de la première face en regard d'un motif de la deuxième face ;
- au moins un deuxième substrat électriquement conducteur formant collecteur de courant comprenant deux faces, dont une première face supporte une électrode selon au moins un motif et la deuxième face supporte une électrode selon deux motifs distants l'un de l'autre en définissant une zone dépourvue de motifs, l'un des deux motifs de la deuxième face étant supporté dans une même zone que le motif de la première face, le deuxième substrat étant plié sur lui-même au niveau de la zone dépourvue de motifs de sorte à avoir une forme de U avec un motif de la première face en regard d'un motif de la deuxième face,
- un séparateur isolant électriquement imbibé d'un électrolyte et plié sur lui-même selon une forme d'accordéon imbriquée dans chacune des formes de U des premier et deuxième substrats elles-mêmes imbriquées l'une dans l'autre, de sorte à ce que ledit séparateur imbibé d'électrolyte soit en contact avec chacun des motifs d'électrode.

Pour chacun des compartiments :
- au moins un des premier et deuxième substrats constituant les substrats d'extrémité a une face avec exactement un seul motif d'électrode et les motifs d'électrode d'un même substrat sont de même polarité ;
- les motifs d'électrode du deuxième substrat sont de polarité opposée à ceux de l'électrode du premier substrat.

Tous les premier ou deuxième des substrats de l'un des compartiments sont en contact électrique permanent avec continuité de matériau avec respectivement tous les deuxième ou premier des substrats d'un autre des compartiments adjacent, par leurs zones dépourvues d'électrode qui constituent le fond des formes de U ; les motifs d'électrode des substrats d'un compartiment, en contact électrique permanent, étant de polarité opposée avec ceux des substrats de l'autre compartiment adjacent, en contact électrique permanent, en définissant ainsi un collecteur de courant bipolaire.

L'accumulateur selon l'invention comprend en outre un joint isolant électrique agencé sur chaque bord périphérique de chaque compartiment non recouvert par un substrat ou par la zone de contact électrique permanent avec continuité de matériau entre substrats, de sorte à réaliser l'étanchéité des électrolytes et à isoler les compartiments de l'air ambiant.

La solution selon l'invention permet d'augmenter la capacité d'une batterie Li-ion bipolaire tout en lui assurant un bon fonctionnement en puissance puisque le grammage des électrodes peut rester faible.

Contrairement aux solutions selon l'état de l'art, selon lesquelles on réalise des collecteurs de courant bipolaires par couchage (dépôt) de motifs d'électrode de polarité opposée de part et d'autre d'un même substrat pour former un collecteur de courant ou électrode bipolaire, la solution selon l'invention consiste essentiellement à :
- réaliser tout d'abord des substrats collecteurs de courant supportant des motifs d'électrode de même polarité,
- à plier lesdits substrats sur eux-mêmes pour augmenter la capacité des compartiments électrochimiques tout en limitant son encombrement (la hauteur des compartiments électrochimiques étant de toute façon limitée par la faible épaisseur des substrats, motifs d'électrode et séparateur contenant l'électrolyte) ;
- puis à mettre en série permanente deux compartiments électrolytiques avec continuité de matériau via leurs collecteurs supportant chacun des motifs d'électrode de polarité opposée, cette mise en série réalisant des collecteurs de courant bipolaire.

Autrement dit, ici, selon l'invention on réalise des collecteurs ce courant bipolaires qui délimitent deux compartiments électrolytiques distincts et adjacents l'un avec l'autre avec des surfaces actives d'électrode augmentées du fait du pliage judicieux de deux substrats.

La solution selon l'invention permet de s'affranchir des problèmes de pression/contre-pression entre les compartiments électrolytiques adjacents dans les architectures bipolaires à empilement selon l'état de l'état de l'art.

Selon l'invention, lors de la réalisation d'un compartiment, on veille à appliquer un effort de compression suffisant pour appliquer les uns contre les autres les motifs d'électrode positive, négative et séparateur/électrolyte.

Le joint isolant électrique peut être constitué d'une résine ou d'une colle. Il peut s'agir d'un élastomère de la famille des éthylène-propylène comme l'EPDM, ou de la famille des styrène-butadiène comme les latex ou de la famille des silicones ou encore celle des thermoplastiques élastomères (TPE), du type styréniques comme le SBS® ou le Kapton®.

L'accumulateur selon l'invention peut comprendre un emballage souple ou boitier rigide pour contenir les compartiments avec étanchéité.

Ainsi, selon un premier mode de réalisation, l'accumulateur peut comprendre :
- deux collecteurs de courant terminaux constitués chacun d'une lamelle dont une reliée à la face d'un substrat d'extrémité d'un des compartiments adjacent avec un seul autre compartiment et qui comporte un seul motif d'électrode et l'autre à la face d'un substrat d'extrémité de l'autre des compartiments adjacent avec un seul autre compartiment et qui comporte un seul motif d'électrode, les motifs d'électrode reliée à une des deux lamelles étant de polarité opposée à ceux de l'électrode reliée à l'autre des lamelles ;
- un emballage souple agencé pour contenir les compartiments avec étanchéité tout en étant traversé par une partie des lamelles formant les pôles de charge de l'accumulateur.

En ce qui concerne l'emballage souple, on peut utiliser ceux actuellement commercialisés, les compartiments électrochimiques selon l'invention étant déjà isolés de l'air ambiant avant la mise en place de l'emballage. De tels emballages souples usuels peuvent être fabriqués à partir d'un matériau composite multicouche constitué typiquement d'un empilement de couches d'aluminium recouvertes par un polymère. Dans la plupart, le polymère recouvrant l'aluminium est choisi parmi le polyéthylène (PE), le propylène, le polyamide (PA) ou peut être sous la forme d'une couche adhésive constituée de polyester-polyuréthane. Typiquement, les sociétés Showa Denko et DNP commercialisent ce type de matériaux composite pour une utilisation en tant qu'emballage de batteries. Par exemple, un emballage souple fabriqué à partir d'une empilement de couches en aluminium est fourni par la société Showa Denko sous les références N° ADR-ON25/AL40/CPP40 ou N° ADR-ON25/AL40/CPP80.

Selon un deuxième mode de réalisation distinct du premier mode de réalisation, l'accumulateur peut comprendre :
- deux collecteurs de courant terminaux constitués chacun d'une lamelle dont une reliée à la face du substrat d'extrémité d'un des compartiments adjacent avec un seul autre compartiment et qui comporte un seul motif d'électrode et l'autre à la face du substrat d'extrémité de l'autre des compartiments adjacent avec un seul autre compartiment et qui comporte un seul motif d'électrode, les motifs d'électrode reliée à une des deux lamelles étant opposée à ceux de l'électrode reliée à l'autre des lamelles ;
- un film isolant électrique recouvrant les faces libres de chaque compartiment tout en étant traversé par une partie des lamelles ;
- un emballage métallique rigide formant boitier agencé pour contenir les compartiments recouvert par le(s) film(s) isolant électrique, les lamelles étant reliées chacune à un plot en saillie du boitier métallique formant chacun l'un des pôles de charge de l'accumulateur, l'un des pôles étant isolé électriquement du boitier métallique par un joint isolant électrique supplémentaire agencé de manière annulaire audit plot.

En ce qui concerne le film isolant électrique, il peut s'agir par exemple d'un polymère flexible isolant électrique tel que du PTFE, PVDF, silicone polyimide, polyuréthane, parylène ou le PET.

En ce qui concerne le boitier métallique, il peut s'agir d'un boitier en aluminium ou acier inoxydable.

Chaque substrat formant collecteur de courant peut être un feuillard métallique ou grille avec au moins une face recouverte d'un feuillard métallique. Ainsi, lorsque les motifs d'électrodes sont réalisées sur une grille, le feuillard métallique qui la recouvre et en étant soudé assure une étanchéité vis-à-vis de l'électrolyte liquide d'un compartiment électrolytique à celui (ceux) adjacent(s). Chaque substrat formant collecteur de courant peut être en aluminium ou en cuivre.

De préférence, tous les compartiments sont identiques entre eux.

Chaque séparateur peut être un film microporeux, tel qu'en polyoléfine, en céramique ou en polymère de type PVDF. On choisit de toute façon, un séparateur d'épaisseur et de matériaux tels qu'il puisse être facilement plié sur lui-même en forme d'accordéon et resté plié pour réaliser son imbrication avec les substrats collecteurs de courant eux-mêmes pliés en forme de U.

Avantageusement, tous les motifs d'électrode à base de matériau d'insertion au lithium négatif sont à base de Li₄Ti₅O₁₂ et tous les motifs d'électrode à base de matériau d'insertion au lithium positif sont à base de LiFePO4. Un tel couple électrochimique Li₄Ti₅O₁₂/LiFePO4 qui offre un potentiel de 1,88 Volt présente notamment comme avantages une grande stabilité lors des tests de sécurité et des performances à régime de charge/décharge élevées.

Chaque électrolyte est de préférence un électrolyte carbonaté contenant un sel de lithium, tel que le LiPF₆.

L'invention a également pour objet un procédé de réalisation d'un accumulateur électrochimique Li-ion de type bipolaire comprenant au moins deux compartiments électrochimiques agencés adjacents entre eux en étant en série électrique, selon lequel on réalise les étapes suivantes:
A/ pour chaque compartiment électrochimique, au moins une fois les étapes a/ à f/ suivantes :
   a/ dépôt, sur une première face d'un premier substrat électriquement conducteur formant collecteur de courant, d'au moins un motif d'électrode et, sur une deuxième face du premier substrat opposée à la première face, de deux motifs d'électrode de même signe que le motif d'électrode de la première face, les deux motifs étant distants l'un de l'autre en définissant une zone dépourvue de motifs, l'un des deux motifs de la deuxième face étant déposé dans une même zone que le motif de la première face ;
   b/ pliage sur lui-même du premier substrat électriquement conducteur de sorte à le conformer sensiblement en forme de U ;
   c/ réalisation des étapes a/ et b/ avec un deuxième substrat électriquement conducteur formant collecteur de courant et dépôt de trois motifs d'électrode de polarité opposée à ceux déposés sur le premier substrat ; les dimensions des premier et deuxième substrats pliés sur eux-mêmes étant sensiblement égales entre elles ;
   d/ pliage sur lui-même d'un séparateur électriquement isolant de sorte à le conformer sensiblement en forme d'accordéon,
   e/ imbrication du séparateur plié sur lui-même dans les premier et deuxième substrats pliés chacun sur eux-mêmes et imbriqués eux-mêmes l'un dans l'autre de sorte à ce que le séparateur en forme d'accordéon vienne épouser à la fois chaque motif d'électrode et les bords périphériques des substrats ;
   f/ réalisation de joints d'étanchéité sur les bords périphériques des substrats d'extrémité du compartiment et sur un des bords périphériques des substrats non entourés par les substrats pliés sur eux-mêmes, l'étape f/ étant réalisée une fois le séparateur imprégné d'un électrolyte.
B/ mise en contact électrique permanent avec continuité de matériau de tous les premier ou deuxième substrats d'un des compartiments avec respectivement tous les deuxième ou premier des substrats d'un autre compartiment adjacent par leurs zones dépourvues de motifs qui constituent le fond des formes de U, les motifs d'électrode des substrats d'un compartiment en contact électrique permanent étant de polarité opposée avec ceux des substrats de l'autre compartiment adjacent en contact électrique permanent, en définissant ainsi un collecteur de courant bipolaire.

Le procédé selon l'invention permet d'obtenir un accumulateur Li-ion bipolaire de grande capacité par des techniques de pliage des collecteurs de courant avec motifs d'électrodes et séparateurs contenant l'électrolyte, faciles à mettre en oeuvre.

De préférence, on imprègne un séparateur avec l'électrolyte avant la réalisation de l'étape A-f/.

On peut réaliser les étapes de dépôt de couches actives des motifs d'électrode sur substrat électriquement conducteur par enduction. De préférence, on utilise comme technique d'enduction, le procédé appelé en anglais « slot die » : il permet un contrôle suivant la direction orthogonale à la surface de la position de la tête d'enduction non en contact avec le substrat conduisant à définir des motifs de dépôts et des zones d'absence de motifs de dépôt. Un tel procédé est particulièrement avantageux dans le cadre de l'invention car il permet la réalisation en continu d'alternance de motifs de couche active de même polarité sur une même face de substrat.

On peut réaliser avantageusement l'étape B/ de mise en contact électrique permanent :
- soit par soudure électrique ou par soudure laser ;
- soit par technique de plaquage de métal entre substrats collecteurs de courant.

On peut réaliser l'étape B/ en utilisant une plaque métallique intermédiaire entre les deux substrats collecteurs de courant mis en contact électrique permanent.

### BRÈVE DESCRIPTION DES DESSINS

D'autres avantages et caractéristiques de l'invention ressortiront mieux à la lecture de la description faite à titre illustratif en référence aux figures suivantes parmi lesquelles :
- la figure 1 est une vue schématique en coupe longitudinale d'une batterie bipolaire au lithium selon l'état de l'art,
- les figures 2A et 2B sont respectivement des vues de face et en coupe d'un collecteur de courant bipolaire utilisé dans une batterie bipolaire au lithium selon l'état de l'art,
- les figures 3A et 3B sont respectivement des vues de face et en coupe d'un autre collecteur de courant bipolaire utilisé dans une batterie bipolaire au lithium selon l'état de l'art,
- les figures 4A et 4B sont respectivement des vues de dessus et de côté d'un collecteur de courant selon l'invention ;
- les figures 4C à 4F sont des vues de côté montrant schématiquement les différentes étapes de réalisation d'un compartiment électrochimique selon l'invention ;
- les figures 5 et 5A sont des vues de côté montrant deux batteries bipolaires Li-ion selon l'invention réalisées à partir respectivement de deux et quatre compartiments électrochimiques selon la figure 4F ;
- les figures 6A à 6F sont des vues de côté montrant les différentes étapes de réalisation d'une autre batterie bipolaire selon l'invention ;
- la figure 7 montre l'intégration d'un accumulateur électrochimique Li-ion bipolaire selon l'invention dans un emballage souple ;
- la figure 8 montre l'intégration d'un accumulateur électrochimique Li-ion bipolaire selon l'invention dans un emballage rigide.

### EXPOSÉ DÉTAILLÉ DE MODES DE RÉALISATION PARTICULIERS

Les figures 1 à 3B se rapportent à une batterie bipolaire selon l'état de l'art et ont déjà été commentées en préambule. Elles ne sont pas plus commentées en détail ici.

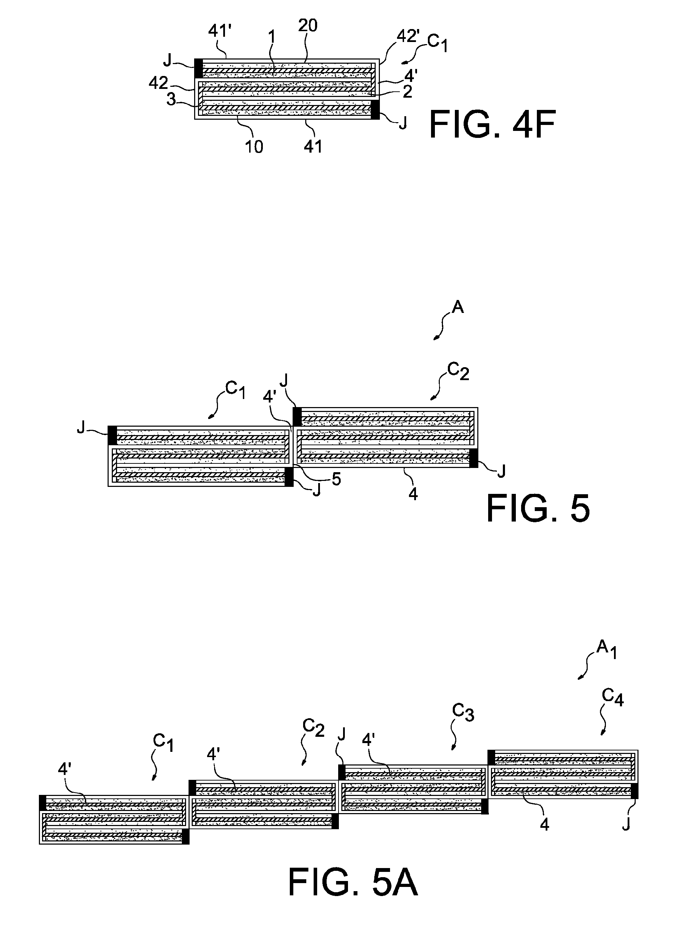

Un compartiment électrochimique C1 Lithium-ion selon l'invention est montré en figure 4F.

Un accumulateur électrochimique Lithium-ion A de type bipolaire selon l'invention comprenant deux compartiments électrochimiques C1, C2 identiques, adjacents l'un avec l'autre et en série électrique est représenté en figure 5.

Un autre accumulateur électrochimique Lithium-ion A1 de type bipolaire selon l'invention comprenant quatre compartiments électrochimiques C1 à C4 identiques, adjacents entre eux et en série électrique est représenté en figure 5A.

Chacun de ces compartiments électrochimiques C1 à C4 comprend tout d'abord un premier substrat 4 électriquement conducteur formant collecteur de courant comprenant deux faces 40, 41.

Sur une des faces 41 est déposée une électrode positive selon un unique motif 1.

Sur l'autre face 41 est déposée une électrode positive selon deux motifs 1, 10 distants l'un de l'autre en définissant une zone 42 dépourvue de motifs. L'un des deux motifs 1 de la deuxième face 41 étant déposé dans une même zone que le motif 1 de la première face 40. Comme visible sur la 4F, le premier substrat 4 est plié sur lui-même au niveau de la zone 42 dépourvue de motifs de sorte à avoir une forme de U avec un motif 1 de la première face en regard d'un motif 1 de la deuxième face.

Chacun des compartiments C1 à C4 comprend également un deuxième substrat électriquement conducteur 4' formant collecteur de courant comprenant deux faces 40', 41'. Le deuxième substrat électriquement conducteur 4 est similaire au premier substrat conducteur 4 décrit précédemment, mais il comprend des motifs 2, 20 d'électrode négative, c'est-à-dire de polarité opposée à celles du premier substrat 4. Une fois pliés sur eux-mêmes, les premier 4 et deuxième 4' substrats électriquement conducteur sont de dimensions et de formes sensiblement identiques.

Ainsi, un premier 4 et un deuxième substrat 4' formant collecteur de courant selon l'invention supporte chacun des motifs d'électrode d'une même polarité, à savoir respectivement positive et négative.

Enfin, chacun des compartiments C1 à C4 comprend un séparateur 3 isolant électriquement imbibé d'un électrolyte et plié sur lui-même selon une forme d'accordéon imbriquée dans chacune des formes de U des premier 4 et deuxième 4' substrats elles-mêmes imbriquées l'une dans l'autre, de sorte à ce que ledit séparateur imbibé d'électrolyte soit en contact avec chacun des motifs 1, 10 ; 2, 20 d'électrode.

Ici, pour chacun des compartiments C1 à C4, le premier 4 et deuxième 4' substrats constituent les substrats d'extrémité et ont chacun une face 41, 41' avec exactement un seul motif 1 d'électrode.

Comme visible en figure 5, le substrat 4 du compartiment C1 est en contact électrique permanent avec continuité de matériau avec le substrat 4' de l'autre compartiment C2 adjacent, par leurs zones 42, 42' dépourvues de motifs qui constituent le fond des formes de U.

De la sorte, les motifs d'électrode négative 2, 20 du substrat 4' du compartiment C1 en contact électrique permanent sont de polarité opposée avec ceux d'électrode positive 1, 10 du substrat 4 du compartiment C2 adjacent à C1 et définissent ainsi un collecteur de courant bipolaire.

Comme visible en figure 5A, de manière analogue, trois collecteurs de courant bipolaire sont définis chacun entre deux compartiments adjacents l'un avec l'autre C1-C2 ; C2-C3, C3-C4.

Enfin, l'accumulateur selon l'invention A ou A1 comprend en outre un joint isolant électrique J agencé sur chaque bord périphérique de chaque compartiment C1 à C4 non recouvert par un substrat 4, 4' ou par la zone de contact électrique permanent avec continuité de matériau entre substrats, de sorte à réaliser l'étanchéité des électrolytes et à isoler les compartiments de l'air ambiant.

Pour réaliser cet accumulateur A ou A1, on a procédé de la manière suivante Selon l'invention :
- Etape 1 : La réalisation des électrodes positives (cathodes) 1 et négatives (anodes) 2 est effectuée distinctement selon des motifs 1, 10 ou 2, 20 de même polarité sur chacune des faces 40, 41 d'un collecteur de courant 4 ou 4'.

La réalisation des motifs peut se faire selon différentes méthodes d'impression (par exemple : sérigraphie, héliographie, enduction de type « slot-die »...). Le substrat 4 ou 4' formant collecteur de courant est ici identique quelle que soit la polarité des couches déposées. Cela peut être un feuillard en aluminium Al ou une grille recouverte d'un feuillard en aluminium. Pour le motif d'électrode 10 ou 20 à fonction d'électrode terminale, une enduction monoface est préférentiellement réalisée. Les motifs d'électrodes 1, 2 sont calandrés à chaud pour obtenir la porosité souhaitée (entre 30 et 50 %, typiquement 40 % pour un fonctionnement optimal en puissance).

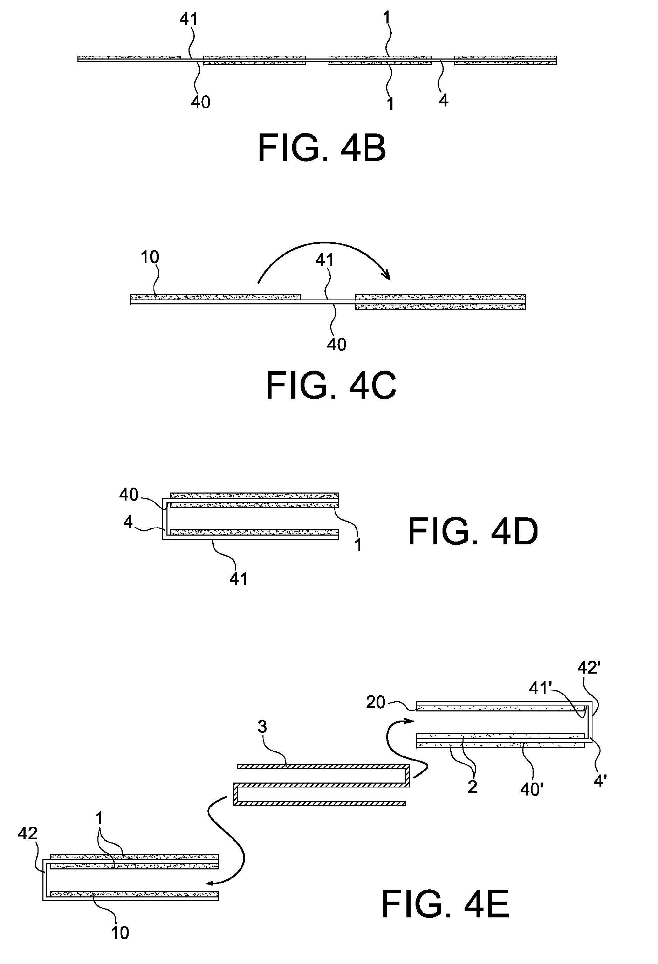

Cette étape 1 est montrée plus précisément en figures 4A et 4B pour la réalisation du collecteur 4 avec des motifs 1, 10 d'électrode positive. On réalise la même étape pour la réalisation du collecteur 4' avec des motifs 2, 20 d'électrode
- Etape 2 : Un collecteur de courant 4 avec sur ses deux faces 40, 41 un motif d'électrode 1 ou 2 d'un même signe et à distance sur l'une de ses faces 40 ou 41 un autre motif d'électrode terminale de même signe 10 ou 20 est coupé puis plié de sorte qu'il puisse être soudé sur la pliure 42.

Cette étape 2 de découpage et pliage est montrée respectivement aux figures 4C et figure 4D pour le collecteur 4 avec motifs 1, 10 d'électrode positive.
- Etape 3 : On imbrique mutuellement le séparateur 3 plié sur lui-même en forme d'accordéon, un substrat 4 plié sur lui-même en forme de U avec ses motifs d'électrode positives 1,10 et l'autre substrat 4' plié sur lui-même en forme de U avec ses motifs d'électrode négatives 2, 20 de sorte à constituer un compartiment électrochimique C1 (figure 4 E). Ainsi, un motif de cathode 1, 10 et un motif d'anode 2, 20 du compartiment C1 sont en regard mutuellement en étant séparés par le séparateur 3.

La forme d'accordéon de ce dernier épouse un des bords périphériques du collecteur de courant 4' supportant trois motifs d'anode 2, 20 et un des bords périphériques du collecteur de courant 4 supportant deux cathodes 1. Le fond 42, 42' du U des substrats 4, 4' vient épouser également la forme d'accordéon du séparateur 3 mais sur l'extérieur. Les fond 42, 42' du U (ou pliure) des collecteurs 4, 4' constituent en eux-mêmes ainsi chacun un joint étanche aux électrolytes pour tous les bords périphériques de compartiments C1 à C4 qu'ils épousent.

Par ailleurs, un joint d'étanchéité J en matériau isolant électrique est agencé sur chaque bord périphérique du compartiment C1 non recouvert par un des substrats 4, 4' de sorte à réaliser l'étanchéité de l'électrolyte et à isoler le compartiment de l'air ambiant.

On obtient finalement le compartiment électrolytique C1 montré en figure 4F.

Concernant l'activation du compartiment, le séparateur 3 et les motifs électrodes 1,10 ; 2, 20 peuvent être pré imprégnés ou gélifiés ou encore, de l'électrolyte liquide peut être injecté via des seringues avant de sceller le compartiment aux endroits où sont réalisés les joints d'étanchéité J.
- Etape 4 : Pour obtenir un accumulateur A, A1 avec au moins deux compartiments électrochimiques identiques C1 à C4 mis en série électriquement on procède ensuite de la manière suivante. Le contact électrique de deux compartiments électrochimiques identiques C1-C2, C2-C3, C3-C4 adjacents est réalisé dès que les substrats 4 supportant les motifs d'électrode positive (cathode) 1, 10 d'un compartiment va toucher les substrats 4' supportant les motifs d'électrode négative 2, 20 d'un autre compartiment qui lui est adjacent. On vise à réaliser de fait une continuité de matériau entre substrats 4, 4' de deux compartiments adjacents.

C'est à ce moment que la mise en série des compartiments C1-C2, C2-C3, C3-C4 adjacents via un même collecteur de courant 4, 4' qui constitue ainsi un collecteur de courant bipolaire est effectuée.

Pour minimiser la résistance de contact entre les deux compartiments jointifs C1-C2, C2-C3, C3-C4, il est plus avantageux d'employer des techniques de soudure 5. Cette dernière peut être électrique, avec l'apport d'un matériau conducteur, laser ou par plaquage par laminage.

Un accumulateur A obtenu selon l'invention est alors constitué de deux compartiments électrochimiques C1 et C2 est ainsi montré en figure 5.

Le collecteur de courant 4 ou 4' des électrodes 1, 10 ou 2, 10 peut être poreux. On prévoit dans ce cas de les souder à un feuillard d'aluminium intermédiaire qui assure l'étanchéité entre deux compartiments électrochimiques adjacents. Les électrodes bipolaires selon l'invention sont ainsi réalisées deux à deux par soudure des collecteurs 4, 4'.

La tension d'un accumulateur selon l'invention peut être augmentée en augmentant le nombre de compartiments adjacents et en série électrique mis en contact permanent et réalisés selon les mêmes étapes 1 à 4 de fabrication décrites ci-dessus. On peut aussi réalisée un accumulateur A1 avec quatre compartiments électrochimiques C1 à C4 identiques (figure 5A).

Dans cet exemple de réalisation, les électrodes 1, 2 sont réalisées sous forme de motifs (par exemple des carrés de 30cm x 30 cm, c'est-à-dire de surface unitaire de 900cm², selon un grammage d'encre d'électrode sèche de 1 mAh/cm²).

Le substrat conducteur électrique 4 ou 4' pour les électrodes positives 1, 10 et les électrodes négatives 2, 20 est avantageusement en aluminium.

Les motifs d'électrode positive 1, 10 peuvent être avantageusement constitués par une couche active à base de matériaux d'insertion au lithium positif, tel que du Li_{1.04}Mn_{1.96}O₄ ou LiFePO₄.

Les motifs d'électrodes négatives 2, 20 peuvent être avantageusement constitués par une couche active à base de matériau d'insertion au lithium négatif, tel que du Li₄Ti₅O₁₂.

De préférence, les couches actives à base de matériaux d'insertion au lithium positif ou négatif sont déposées par couchage (par enduction) sur un substrat métallique d'une encre d'électrode comportant le matériau actif, un conducteur électronique et du polymère, typiquement du Polyfluorure de vinylidène (PVdF), lorsque les électrodes sont réalisées par voie organique. Le polymère est dissous dans un solvant qui est généralement la N-méthyle Pyrollidone. Après évaporation de ce dernier, le polymère parfaitement dispersé avec les poudres, permet l'accroche des grains de matériaux actifs et de conducteur électronique entre eux et sur le collecteur de courant 4.

Pour optimiser le fonctionnement en puissance d'un accumulateur selon l'invention il est préférable de compresser les motifs d'électrode 1, 10, 2, 20, sur le substrat conducteur 4 ou 4' pour optimiser leur porosité. En effet, la porosité doit être suffisamment élevée pour permettre la mouillabilité de l'électrode et optimiser la diffusion ionique pendant le cyclage de l'accumulateur. Elle doit également suffisamment petite pour améliorer le contact des grains de matériaux entre eux (matériaux actifs et conducteur électronique) et optimiser la conduction électrique dans l'électrode jusqu'au collecteur de courant. De préférence, on choisit une porosité des motifs d'électrode 1, 10 ; 2, 20 de l'ordre de 40% pour un bon fonctionnement des électrodes en puissance. Pour permettre d'atteindre une telle porosité on réalise de préférence un calandrage à chaud (80°C) de part et d'autre des motifs d'électrode 1, 10 ou 2, 20. Ainsi, on obtient une diminution de l'épaisseur des électrodes et de fait, de leur porosité.

En ce qui concerne l'étape 3/ d'imbrication des substrats 4, 4' pliés sur eux-mêmes avec le séparateur 3, on peut choisir d'imbriquer d'abord le séparateur 3 dans le substrat 4' supportant les motifs d'électrode négative 2, 20. Autrement dit, le séparateur 3 est alors disposé en contact avec la surface des motifs d'électrode négative 2 ou 20. Il va de soi que l'on peut faire la même opération avec le substrat 4 supportant les motifs d'électrode positive 1 ou 10.

Dans un accumulateur A, A1 selon l'invention, le séparateur 3 plié sur lui-même en forme d'accordéon assure l'isolation électrique entre un motif d'électrode positive 1, 10 et un motif d'électrode négative 2 de chaque compartiment électrochimique C1-C4. De préférence, le séparateur 3 est un film microporeux, tel qu'en polyoléfine, en céramique ou en PVdF. Un film en PVdF est usuellement imprégné d'un électrolyte carbonaté, contenant un sel de lithium, par exemple le sel LiPF₆. On peut aussi prévoir de pré-activer (gélifier le séparateur 3).

Dans le cadre de l'invention, le nombre de substrats 4, 4' pour un même accumulateur, ainsi que la surface et le nombre de pliage des motifs d'électrodes supportés 1, 10 ou 2, 20 peuvent être augmentés afin d'augmenter la tension disponible.

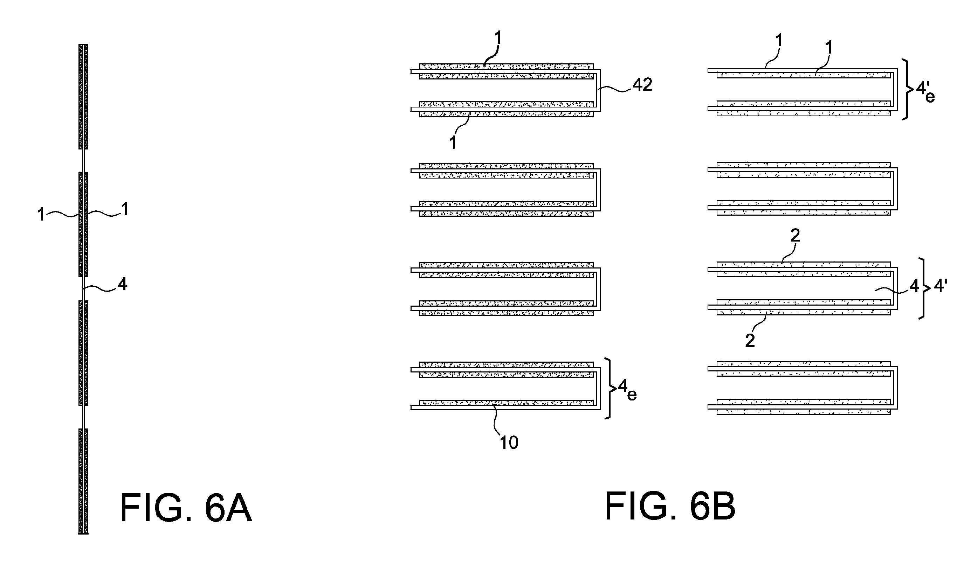

On a représenté aux figures 6A à 6F, les étapes de réalisation d'un accumulateur A2 selon l'invention constitué de deux compartiments électrochimiques C5, C6 identiques adjacents et mis en série électriquement comme précédemment, mais ici chacun des deux compartiments C5, C6 est constitué d'un nombre de quatre substrats 4 supportant des motifs d'électrode positive 1, 10 et de quatre substrats 4' supportant des motifs d'électrode négative 2, 20.

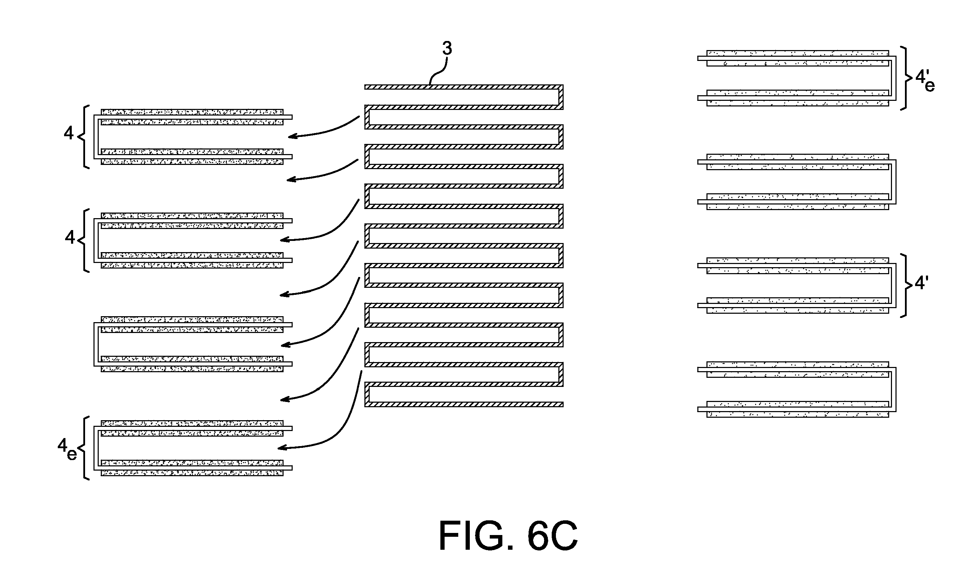

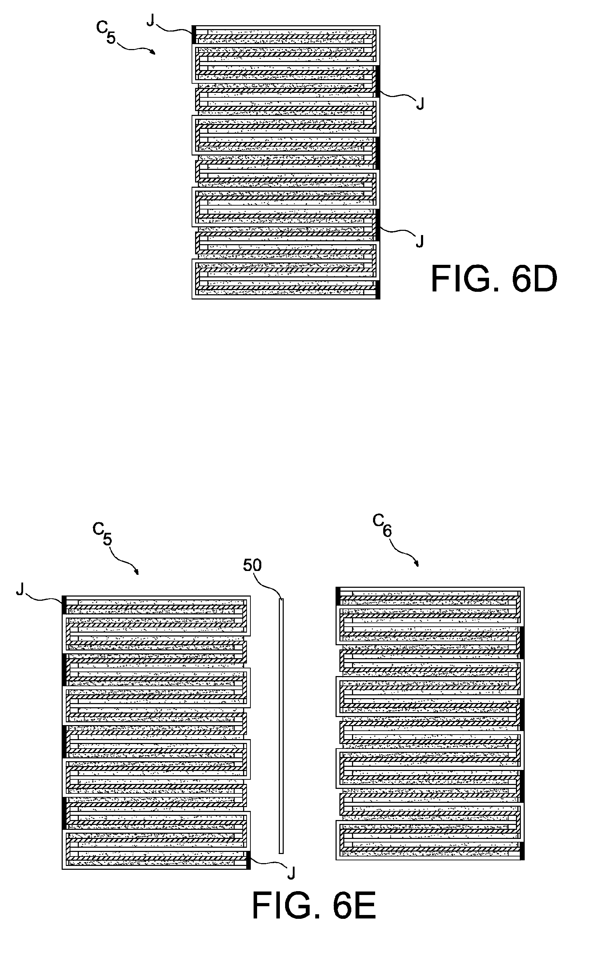

Les étapes de réalisation sont analogues à celles réalisées pour les accumulateurs A, A2 selon les figures 4A à 5A avec successivement :
- une étape de réalisation et découpe des substrats 4, 4' collecteur de courant, comprenant sur chacune de leurs faces 40, 41 ou 40', 41' deux motifs d'électrode 1 ou 2 de même signe et distants l'un de l'autre d'une zone dépourvue de motifs, à l'exception du substrat 4 e, 4'e d'extrémité comprenant le motif d'électrode terminale 10 ou 20 (figures 6A-6B). Autrement dit, ici comparativement aux accumulateurs A, A1 selon les figures 4A à 5A, ici les substrats 4, 4' découpés pour être agencés au sein de chaque compartiment C5, C6 supportent chacun deux motifs d'électrodes 1 ou 2 sur chacune de leur face 40, 41 ou 40', 41'. Autrement dit encore, plié sur lui-même en forme de U, chaque face 40, 41 ou 40', 41' d'une branche du U du collecteur de courant, 4, 4' supporte deux motifs d'électrodes 1 ou 2 de même polarité ;
- une étape de pliage des collecteurs de courants 4, 4' ainsi réalisés (figure 6B) ;
- une étape d'imbrication d'un même séparateur isolant électrique 3 dans chacun des collecteurs de courant 4 à motifs d'électrode positive 1 et dans chacun des collecteurs de courant bipolaires 4' à motifs d'électrode négative 2 (figure 6 C). On précise ici que tout comme pour l'accumulateur A selon l'étape de la figure 4E, on peut d'abord disposer le séparateur 3 en contact avec la surface des motifs d'électrodes négatives 2 ou 20 ;
- une étape d'imprégnation des motifs d'électrodes 1, 2 et séparateur 3 et de scellement des compartiments électrochimiques C5-C6 par dépôt de colle ou résine sur leurs bords périphériques qui ne sont pas épousés par le fond du U ou pliure 42, 42' d'un collecteur de courant 4 ou 4' en constituant ainsi des joints d'étanchéité J. Les zones 30 du séparateur 3 destinées à être recouvertes par la zone de soudure ou de plaquage ne sont pas recouvertes de joints d'étanchéité. Un compartiment électrochimique C5 selon l'invention est ainsi réalisé (figure 6D) ;
- une étape de mise en série électrique de deux compartiments électrochimiques C5 et C6 identiques par soudure ou par plaquage par laminage à l'aide d'une plaque aluminium intermédiaire 50 comme montré en figure 6E. On précise ici que tout comme pour l'étape 4/ de soudure 5 entre deux compartiments électrochimiques adjacents C1-C2 ; C2-C3 ; C3-C4 exposée ci-dessus pour l'accumulateur A ou A1 ; on décale selon le sens de la hauteur un des deux compartiments C5 par rapport à l'autre C6 d'une hauteur suffisante pour mettre en regard les pliures 42, 42' afin qu'elles soient plaquées entre elles de manière à obtenir la continuité de matériau visée.

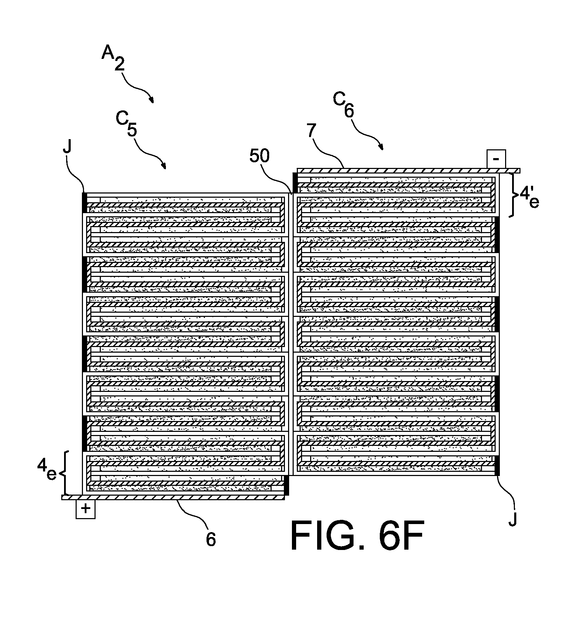

En figure 6F, on a représenté l'accumulateur A2 bipolaire selon l'invention avec des motifs d'anode 2, 20 en Li₄Ti₅O₁₂ et des motifs de cathode 1, 10 en LiFePO₄ et avec leurs collecteurs de courant terminaux respectivement positif 6 et négatif 7 sous forme de lamelles soudées aux substrats d'extrémités 4e et 4'e.

Dans un accumulateur bipolaire Li-ion selon l'invention, chaque motif d'électrode positive 1 d'un compartiment électrochimique donné C1 à C6 n'est pas en contact électrique avec le motif d'électrode négative 2 avec laquelle il fonctionne d'un point de vue électrochimique (intercalation/désintercalation d'ion Li+) .

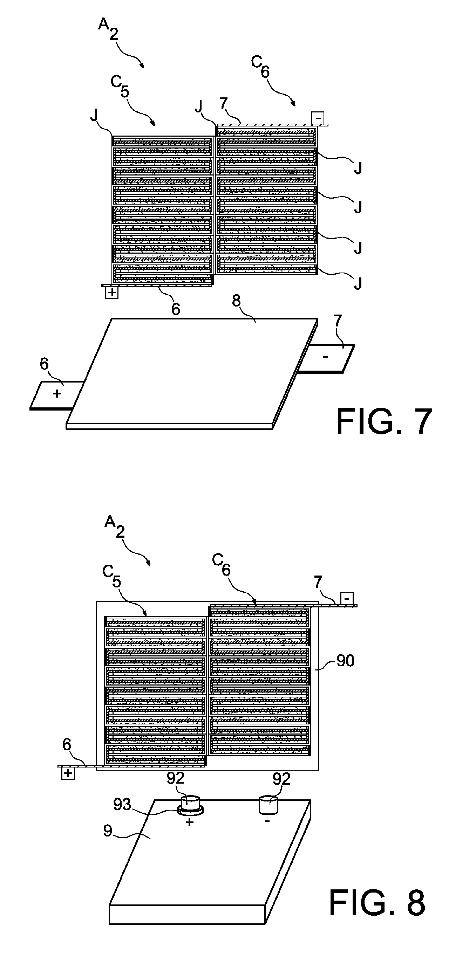

En figure 7, on a représenté l'accumulateur bipolaire A2 selon l'invention intégré dans un emballage souple 8 agencé pour contenir les compartiments C5, C6 avec étanchéité tout en étant traversé par une partie des lamelles 6, 7 formant les pôles de charge de l'accumulateur. Un emballage souple à base de matériaux composite déjà commercialisé par les sociétés DNP et Showa Denko et DNP pour une utilisation en tant qu'emballage de batteries peut tout à fait convenir pour l'invention.

En figure 8, on a représenté l'accumulateur bipolaire A2 selon l'invention intégré dans un boitier métallique rigide 9. Ici, un film isolant électrique 90 recouvre toutes les faces libres des deux compartiments C5 et C6 tout en étant traversé par les lamelles 6, 7 elles-mêmes soudées aux substrats d'extrémité 4e, 4'e. Ici, le boitier métallique rigide 9 est agencé pour contenir les compartiments recouvert par le(s) film(s) isolant électrique 90. Les lamelles 6, 7 sont soudées chacune à un plot 91, 92 en saillie du boitier métallique formant chacun l'un des pôles de charge de l'accumulateur. L'un des pôles 91 est en outre isolé électriquement du boitier métallique 9 par un joint isolant électrique 93 supplémentaire agencé de manière annulaire audit plot. Un boitier métallique en inox ou aluminium déjà commercialisé pour une utilisation en tant qu'emballage de batteries peut tout à fait convenir pour l'invention.

L'invention qui vient d'être décrite permet d'augmenter fortement la capacité d'un accumulateur bipolaire Li-ion tout en conservant un faible encombrement.

## Revendications

1. Accumulateur électrochimique (A, A1, A2) Li-ion de type bipolaire, comprenant au moins deux compartiments électrochimiques (C1, C2 ; C1 à C4 ; C5, C6) agencés adjacents entre eux en étant en série électrique, chacun des compartiments comprenant :
- au moins un premier substrat (4) électriquement conducteur formant collecteur de courant comprenant deux faces (40, 41), dont une première face (41) supporte une électrode selon au moins un motif (1) et la deuxième face (40) supporte une électrode selon deux motifs (1, 10) distants l'un de l'autre en définissant une zone (42) dépourvue de motifs, l'un (1) des deux motifs de la deuxième face étant supporté dans une même zone que le motif (1) de la première face, le premier substrat étant plié sur lui-même au niveau de la zone dépourvue de motifs de sorte à avoir une forme de U avec un motif de la première face en regard d'un motif de la deuxième face ;
- au moins un deuxième substrat (4') électriquement conducteur formant collecteur de courant comprenant deux faces (40', 41'), dont une première face (41') supporte une électrode selon au moins un motif (2) et la deuxième face (40') supporte une électrode selon deux motifs (2, 20) distants l'un de l'autre en définissant une zone (42') dépourvue de motifs, l'un (2) des deux motifs de la deuxième face étant supporté dans une même zone que le motif (2) de la première face, le deuxième substrat étant plié sur lui-même au niveau de la zone dépourvue de motifs de sorte à avoir une forme de U avec un motif de la première face en regard d'un motif de la deuxième face,
- un séparateur (3) isolant électriquement imbibé d'un électrolyte et plié sur lui-même selon une forme d'accordéon imbriquée dans chacune des formes de U des premier et deuxième substrats elles-mêmes imbriquées l'une dans l'autre, de sorte à ce que ledit séparateur imbibé d'électrolyte soit en contact avec chacun des motifs (1, 10, 2, 20) d'électrode ;
dans lequel, pour chacun des compartiments (C1, C2, C3, C4 ; C5, C6), au moins un des premier et deuxième substrats constituant les substrats d'extrémité (4e, 4'e) a une face avec exactement un seul motif (1, 2) d'électrode,
dans lequel, pour chacun des compartiments, les motifs d'électrode d'un même substrat sont de même polarité ;
dans lequel, pour chacun des compartiments, les motifs d'électrode du deuxième substrat (4') sont de polarité opposée à ceux de l'électrode du premier substrat (4) ;
dans lequel tous les premier (4) ou deuxième des substrats de l'un des compartiments (C1 à C6) sont en contact électrique permanent avec continuité de matériau avec respectivement tous les deuxième (4') ou premiers des substrats d'un autre des compartiments adjacent (C6 à C1) par leurs zones dépourvues d'électrode (42, 42') qui constituent le fond des formes de U ; les motifs d'électrode (1, 10) des substrats (4) d'un compartiment, en contact électrique permanent, étant de polarité opposée avec ceux (2, 20) des substrats (4') de l'autre compartiment adjacent, en contact électrique permanent, en définissant ainsi un collecteur de courant bipolaire ;
l'accumulateur comprenant en outre un joint isolant (J) électrique agencé sur chaque bord périphérique de chaque compartiment non recouvert par un substrat ou par la zone (5, 50, 42, 42') de contact électrique permanent avec continuité de matériau entre substrats, de sorte à réaliser l'étanchéité des électrolytes et à isoler les compartiments de l'air ambiant.

2. Accumulateur électrochimique Li-ion de type bipolaire selon la revendication 1, dans lequel le joint isolant électrique (J) est constitué d'une résine ou d'une colle.

3. Accumulateur électrochimique Li-ion de type bipolaire selon la revendication 1 ou 2, comprenant :
- deux collecteurs de courant terminaux constitués chacun d'une lamelle dont une (6) reliée à la face d'un substrat d'extrémité (4e) d'un des compartiments (Ci) adjacent avec un seul autre compartiment (Ci+1) et qui comporte un seul motif d'électrode et l'autre (7) à la face d'un substrat d'extrémité (4'e) de l'autre des compartiments (Ci+1) adjacent avec un seul autre compartiment et qui comporte un seul motif d'électrode, les motifs d'électrode reliée à une des deux lamelles étant de polarité opposée à ceux de l'électrode reliée à l'autre des lamelles ;
- un emballage souple (8) agencé pour contenir les compartiments avec étanchéité tout en étant traversé par une partie des lamelles (6, 7) formant les pôles de charge de l'accumulateur.

4. Accumulateur électrochimique Li-ion de type bipolaire selon la revendication 1 ou 2, comprenant :
- deux collecteurs de courant terminaux constitués chacun d'une lamelle dont une (6) reliée à la face du substrat d'extrémité (4e) d'un des compartiments (Ci) adjacent avec un seul autre compartiment (Ci+1) et qui comporte un seul motif d'électrode et l'autre (7) à la face du substrat d'extrémité (4'e) de l'autre des compartiments adjacent avec un seul autre compartiment et qui comporte un seul motif d'électrode, les motifs d'électrode reliée à une des deux lamelles étant opposée à ceux de l'électrode reliée à l'autre des lamelles ;
- un film isolant électrique (90) recouvrant les faces libres de chaque compartiment tout en étant traversé par une partie des lamelles ;
- un emballage métallique rigide (9) formant boitier agencé pour contenir les compartiments recouvert par le(s) film(s) isolant électrique, les lamelles étant reliées chacune à un plot (91, 92) en saillie du boitier métallique formant chacun l'un des pôles de charge de l'accumulateur, l'un (91) des pôles étant isolé électriquement du boitier métallique par un joint isolant électrique supplémentaire (93) agencé de manière annulaire audit plot.

5. Accumulateur électrochimique Li-ion de type bipolaire selon l'une des revendications précédentes, dans lequel chaque substrat formant collecteur de courant (4, 4') est un feuillard métallique ou grille avec au moins une face recouverte d'un feuillard métallique et/ou est en aluminium ou en cuivre.

6. Accumulateur électrochimique Li-ion de type bipolaire selon l'une des revendications précédentes, dans lequel tous les compartiments (C1, C2 ; C1 à C4, C5, C6) sont identiques entre eux.

7. Accumulateur électrochimique Li-ion de type bipolaire selon l'une des revendications précédentes, dans lequel chaque séparateur est un film microporeux, tel qu'en polyoléfine, en céramique ou en polymère de type PVDF.

8. Accumulateur électrochimique Li-ion de type bipolaire selon l'une des revendications précédentes, dans lequel tous les motifs (2, 20) d'électrode à base de matériau d'insertion au lithium négatif sont à base de Li₄Ti₅O₁₂ et tous les motifs d'électrode à base de matériau d'insertion au lithium positif (1, 10) sont à base de LiFePO4.

9. Accumulateur électrochimique Li-ion de type bipolaire selon l'une des revendications précédentes, dans lequel chaque électrolyte est un électrolyte carbonaté contenant un sel de lithium, tel que le LiPF₆.

10. Procédé de réalisation d'un accumulateur électrochimique Li-ion de type bipolaire (A, A1, A2) comprenant au moins deux compartiments électrochimiques (C1, C2 ; C1 à C4 ; C5, C6) agencés adjacents entre eux en étant en série électrique, selon lequel on réalise les étapes suivantes :
A/ pour chaque compartiment électrochimique, au moins une fois les étapes a/ à f/ suivantes :
a/ dépôt, sur une première face (41) d'un premier substrat (4) électriquement conducteur formant collecteur de courant, d'au moins un motif d'électrode (1) et, sur une deuxième face (40) du premier substrat opposée à la première face, de deux motifs d'électrode (1, 10) de même signe que le motif de la première face, les deux motifs (1, 10) étant distants l'un de l'autre en définissant une zone dépourvue de motifs, l'un (1) des deux motifs de la deuxième face étant déposé dans une même zone que le motif (1) de la première face ;
b/ pliage sur lui-même du premier substrat (4) électriquement conducteur de sorte à le conformer sensiblement en forme de U ;
c/ réalisation des étapes a/ et b/ avec un deuxième substrat électriquement conducteur (4') formant collecteur de courant et dépôt de trois motifs d'électrode (2, 20) de polarité opposée à ceux déposés sur le premier substrat ; les dimensions des premier (4) et deuxième (4') substrats pliés sur eux-mêmes étant sensiblement égales entre elles ;
d/ pliage sur lui-même d'un séparateur électriquement isolant (3) de sorte à le conformer sensiblement en forme d'accordéon,
e/ imbrication du séparateur (3) plié sur lui-même dans les premier et deuxième substrats pliés chacun sur eux-mêmes et imbriqués eux-mêmes l'un dans l'autre de sorte à ce que le séparateur en forme d'accordéon vienne épouser à la fois chaque motif d'électrode (1, 10 ; 2, 20) et les bords périphériques des substrats ;
f/ réalisation de joints d'étanchéité (J) sur les bords périphériques des substrats d'extrémité du compartiment et sur un des bords périphériques des substrats non entourés par les substrats pliés sur eux-mêmes, l'étape f/ étant réalisée une fois le séparateur (3) imprégné d'un électrolyte ;
B/ mise en contact électrique permanent avec continuité de matériau de tous les (4) premier ou deuxième substrats d'un des compartiments avec respectivement tous les deuxième (4') ou premier des substrats d'un autre compartiment adjacent, par leurs zones (42, 42') dépourvues de motifs qui constituent le fond des formes de U ; les motifs d'électrode (1, 10) des substrats (4) d'un compartiment, en contact électrique permanent, étant de polarité opposée avec ceux (2, 20) des substrats (4') de l'autre compartiment adjacent, en contact électrique permanent, en définissant ainsi un collecteur de courant bipolaire.

11. Procédé de réalisation selon la revendication 10, selon lequel on imprègne un séparateur avec l'électrolyte avant la réalisation de l'étape A-f/.

12. Procédé de réalisation selon la revendication 10 ou 11, selon lequel on réalise les étapes de dépôt de motifs d'électrode sur substrat électriquement conducteur par enduction.

13. Procédé de réalisation selon l'une des revendications 10 à 12, selon lequel on réalise l'étape B/ de mise en contact électrique permanent par soudure électrique ou par soudure laser.

14. Procédé de réalisation selon l'une des revendications 10 à 12, selon lequel on réalise l'étape B/ de mise en contact électrique permanent par technique de plaquage de métal entre substrats collecteurs de courant.

15. Procédé de réalisation selon la revendication 13 ou 14, selon lequel on réalise l'étape B/ en utilisant une plaque métallique intermédiaire entre les deux substrats collecteurs de courant mis en contact électrique permanent.

## Patentansprüche

1. Elektrochemischer Li-Ionenakkumulator (A, A1 A2) vom bipolaren Typ, umfassend wenigstens zwei elektrochemische Kammern (C1, C2; C1 bis C4; C5, C6), die zueinander benachbart angeordnet sind, wobei sie elektrisch in Reihe sind, wobei jede der Kammern umfasst:
- wenigstens ein erstes elektrisch leitendes Substrat (4), das einen Stromkollektor bildet, umfassend zwei Seiten (40, 41), von denen eine erste Seite (41) eine Elektrode gemäß wenigstens einem Muster (1) trägt, und die zweite Seite (40) eine Elektrode gemäß zwei voneinander getrennten Mustern (1, 10) trägt, wobei eine Zone (42) ohne Muster definiert wird, wobei das eine (1) der zwei Muster der zweiten Seite in ein und derselben Zone getragen wird wie das Muster (1) der ersten Seite, wobei das erste Substrat im Bereich der Zone ohne Muster auf sich selbst zurückgebogen ist, derart, dass es eine U-Form hat mit einem Muster der ersten Seite gegenüber einem Muster der zweiten Seite;
- wenigstens ein zweites elektrisch leitendes Substrat (4'), das einen Stromkollektor bildet, umfassend zwei Seiten (40', 41'), von denen eine erste Seite (41') eine Elektrode gemäß wenigstens einem Muster (2) trägt, und die zweite Seite (40') eine Elektrode gemäß zwei voneinander beanstandeten Mustern (2, 20) trägt, wobei eine Zone (42') ohne Muster definiert wird, wobei das eine (2) der zwei Muster der zweiten Seite in ein und derselben Zone getragen wird wie das Muster (2) der ersten Seite, wobei das zweite Substrat im Bereich der Zone ohne Muster auf sich selbst zurückgebogen ist, derart, dass es eine U-Form hat mit einem Muster der ersten Seite gegenüber einem Muster der zweiten Seite,
- einen elektrisch isolierenden Separator (3), der mit einem Elektrolyt getränkt ist und in einer Akkordeon-Form auf sich selbst zurückgebogen ist, die mit jeder der U-Formen des ersten und des zweiten Substrats verschachtelt ist, die selbst wiederum ineinander verschachtelt sind, derart, dass der mit Elektrolyt getränkte Separator in Kontakt mit jedem der Elektrodenmuster (1, 10, 2, 20) ist;
wobei für jede der Kammern (C1, C2, C3, C4; C5, C6) wenigstens eines von den ersten und dem zweiten Substrat, die die Endsubstrate (4e, 4'e) bilden, eine Seite mit exakt einem einzigen Elektrodenmuster (1, 2) hat,
wobei für jede der Kammern die Elektrodenmuster ein und desselben Substrats die gleiche Polarität aufweisen;
wobei für jede der Kammern die Elektrodenmuster des zweiten Substrats (4') eine Polarität entgegengesetzt zu jener der Elektrode des ersten Substrats (4) aufweisen;
wobei alle ersten (4) oder zweiten der Substrate einer der Kammern (C1 bis C6) in ständigen elektrischen Kontakt mit Material-Kontinuität mit jeweils allen zweiten (4') oder ersten der Substrate einer anderen der benachbarten Kammern (C6 bis C1) an ihren Zonen ohne Elektrode (42, 42') sind, die den Boden der U-Formen bilden; wobei die Elektrodenmuster (1, 10) der Substrate (4) einer Kammer in ständigem elektrischen Kontakt eine Polarität entgegengesetzt zu jenen (2, 20) der Substrate (4') der anderen benachbarten Kammer im ständigen elektrischen Kontakt aufweisen, wobei somit ein bipolarer Stromkollektor definiert wird;
wobei der Akkumulator ferner eine elektrisch isolierende Dichtung (J) umfasst, die an jedem Umfangsrand jeder Kammer angeordnet ist, die nicht durch ein Substrat oder durch die Zone (5, 50, 42, 42') des ständigen elektrischen Kontakts mit Materialkontinuität zwischen Substraten bedeckt ist, derart, dass eine Elektrolytendichtigkeit realisiert wird und die Kammern von der Umgebungsluft isoliert werden.

2. Elektrochemischer Li-Ionenakkumulator vom bipolaren Typ nach Anspruch 1, bei dem die elektrisch isolierende Dichtung (J) durch ein Harz oder einen Kleber gebildet ist.

3. Elektrochemischer Li-Ionenakkumulator vom bipolaren Typ nach Anspruch 1 oder 2, umfassend:
- zwei Endstromkollektoren, die jeweils durch eine Lamelle gebildet sind, von denen eine (6) mit der Seite eines Endsubstrats (4e) einer der Kammern (Ci) benachbart zu einer einzigen anderen Kammer (Ci + 1) verbunden ist und ein einziges Elektrodenmuster umfasst, und die andere (7) mit der Seite eines Endsubstrats (4'e) der anderen der Kammern (Ci + 1) benachbart zu einer einzigen anderen Kammer und die ein einziges Elektrodenmuster umfasst, wobei die Elektrodenmuster, die mit einer der zwei Lamellen verbunden sind, eine Polarität entgegengesetzt zu jener der Elektrode aufweisen, die mit der anderen der Lamellen verbunden ist;
- eine flexible Umhüllung (8), die dazu ausgelegt ist, die Kammern abdichtend zu enthalten, jedoch durch einen Teil der Lamellen (6, 7) durchsetzt zu sein zum Bilden der Aufladungspole des Akkumulators.

4. Elektrochemischer Li-Ionenakkumulator vom bipolaren Typ nach Anspruch 1 oder 2, umfassend:
- zwei Endstromkollektoren, die jeweils durch eine Lamelle gebildet sind, von denen eine (6) mit der Seite eines Endsubstrats (4e) einer der Kammern (Ci) benachbart zu einer einzigen anderen Kammer (Ci + 1) verbunden ist und ein einziges Elektrodenmuster umfasst, und die andere (7) mit der Seite des Endsubstrats (4'e) der anderen der Kammern (Ci + 1) benachbart zu einer einzigen anderen Kammer und die ein einziges Elektrodenmuster umfasst, wobei die Elektrodenmuster, die mit einer der zwei Lamellen verbunden sind, entgegengesetzt sind zu jenen der Elektrode, die mit der anderen der Lamellen verbunden ist,
- einen elektrisch isolierenden Film (90), der die freien Seiten jeder Kammer bedeckt, jedoch von einem Teil der Lamellen durchsetzt wird;
- eine starre metallische Umhüllung (9), die ein Gehäuse bildet, das dazu ausgelegt ist, die durch den/die elektrisch isolierenden Film(e) bedeckten Kammern zu enthalten, wobei die Lamellen jeweils mit einem vorstehenden Kontaktpunkt (91, 92) des metallischen Gehäuses verbunden sind, die jeweils einen der Aufladungspole des Akkumulators bilden, wobei der eine (91) der Pole von dem metallischen Gehäuse elektrisch durch eine zusätzliche elektrisch isolierende Dichtung (93) isoliert ist, die ringförmig an dem Kontaktpunkt vorgesehen ist.

5. Elektrochemischer Li-Ionenakkumulator vom bipolaren Typ nach einem der vorhergehenden Ansprüche, bei dem jedes Substrat, das einen Stromkollektor (4, 4') bildet, ein metallisches Band oder ein Gitter ist, bei dem wenigstens eine Seite durch ein Metallband bedeckt ist, und/oder aus Aluminium oder aus Kupfer ist.

6. Elektrochemischer Li-Ionenakkumulator vom bipolaren Typ nach einem der vorhergehenden Ansprüche, bei dem alle Kammern (C1, C2; C1 bis C4, C5, C6) zueinander identisch sind.

7. Elektrochemischer Li-Ionenakkumulator vom bipolaren Typ nach einem der vorhergehenden Ansprüche, bei dem jeder Separator ein mikroporöser Film ist, beispielsweise aus Polyolefin, aus Keramik oder aus einem Polymer vom Typ PVDF.

8. Elektrochemischer Li-Ionenakkumulator vom bipolaren Typ nach einem der vorhergehenden Ansprüche, bei dem alle Elektrodenmuster (2, 20) auf Basis von negativen Lithiuminsertionsmaterial auf Basis von Li₄Ti₅O₁₂ sind, und alle Elektrodenmuster auf Basis von positiven Lithiuminsertionsmaterial (1, 10) auf Basis von LiFePO4.

9. Elektrochemischer Li-Ionenakkumulator vom bipolaren Typ nach einem der vorhergehenden Ansprüche, bei dem jeder Elektrolyt ein kohlensäurehaltiger Elektrolyt ist, der ein Lithiumsalz enthält, beispielsweise LiPF₆.

10. Verfahren zur Herstellung eines elektrochemischen Liionenakkumulators vom bipolaren Typ (A, A1, A2), umfassend wenigstens zwei elektrochemische Kammern (C1, C2; C1 bis C4; C5, C6), die zueinander benachbart angeordnet sind, wobei sie elektrisch in Reihe sind, wobei man die folgenden Schritte ausführt:
A/ für jede elektrochemische Kammer wenigstens einmal die nachfolgenden Schritte a/ bis f/:
a/ Aufbringen, auf einer ersten Seite (41) eines elektrisch leitenden ersten Substrats (4), das einen Stromkollektor bildet, wenigstens eines Elektrodenmusters (1), und, auf einer zweiten Seite (40) des ersten Substrats gegenüber der ersten Seite, von zwei Elektrodenmustern (1, 10) mit gleichem Vorzeichen wie das Muster der ersten Seite, wobei die zwei Muster (1, 10) voneinander beabstandet sind, wobei eine Zone ohne Muster definiert wird, wobei das eine (1) der zwei Muster der zweiten Seite in ein und derselben Zone aufgebracht wird wie das Muster (1) der ersten Seite;
b/ Umbiegen des elektrisch leitenden ersten Substrats (4) auf sich selbst derart, dass es im Wesentlichen eine U-Form bildet;
c/ Ausführen der Schritte a/ und b/ mit einem zweiten elektrisch leitenden Substrat (4'), das einen Stromkollektor bildet, und Aufbringen von drei Elektrodenmustern (2, 20) mit einer Polarität entgegengesetzt zu jenen, die auf das erste Substrat aufgebracht sind; wobei die Abmessungen des ersten (4) und des zweiten (4') auf sich selbst zurückgebogenen Substrats im Wesentlichen zueinander gleich sind;
d/ Umbiegen eines elektrisch isolierenden Separators (3) auf sich selbst derart, dass er im Wesentlichen in einer Akkordeon-Form gebildet ist,
e/ Verschachteln des auf sich selbst umgebogenen Separators (3) in das erste und das zweite Substrat, die jeweils auf sich selbst umgebogen sind und selbst wiederum ineinander verschachtelt sind, derart, dass der akkordeonförmige Separator sich gleichzeitig an jedes Elektrodenmuster (1, 10; 2, 20) und an die Umfangsränder der Substrate anschmiegt;
f/ Realisieren von Dichtigkeitsdichtungen (J) an den Umfangsrändern der Endsubstrate der Kammer und an einem der Umfangsränder der Substrate, die nicht durch die auf sich selbst umgebogenen Substrate umgeben sind, wobei der Schritt f/ realisiert wird, sobald der Separator (3) mit einem Elektrolyt getränkt ist;
B/ ständiges elektrisches In-Kontakt-Bringen mit Materialkontinuität von allen (4) ersten oder zweiten Substraten einer der Kammern mit jeweils allen zweiten (4') oder ersten der Substrate einer anderen benachbarten Kammer an ihren Zonen (42, 42') ohne Muster, die den Boden der U-Formen bilden; wobei die Elektrodenmuster (1, 10) der Substrate (4) einer Kammer in ständigem elektrischen Kontakt eine Polarität aufweisen, die entgegengesetzt ist zu jenen (2, 20) der Substrate (4') der anderen benachbarten Kammer in ständigem elektrischen Kontakt, wodurch somit ein bipolarer Stromkollektor definiert wird.

11. Herstellungsverfahren nach Anspruch 10, bei dem man einen Separator mit dem Elektrolyt tränkt, bevor der Schritt A-f/ ausgeführt wird.

12. Herstellungsverfahren nach Anspruch 10 oder 11, bei dem man die Schritte zum Aufbringen von Elektrodenmustern auf einem elektrisch leitenden Substrat durch Beschichtung ausführt.

13. Herstellungsverfahren nach einem der Ansprüche 10 bis 12, bei dem man den Schritt B/ zum ständigen elektrischen In-Kontakt-Bringen durch elektrisches Schweißen oder durch Laserschweißen ausführt.

14. Herstellungsverfahren nach einem der Ansprüche 10 bis 12, bei dem man den Schritt B/ zum ständigen elektrischen In-Kontakt-Bringen durch eine Metallwalztechnik zwischen Stromkollektorsubstraten ausführt.

15. Herstellungsverfahren nach Anspruch 13 oder 14, bei dem man den Schritt B/ ausführt unter Verwendung einer Zwischenmetallplate zwischen den zwei Stromkollektorsubstraten, die in ständigen elektrischen Kontakt gebracht werden.

## Claims

1. Bipolar Li-ion electrochemical battery (A, A1, A2) comprising at least two electrochemical compartments (C1, C2; C1 to C4; C5, C6) arranged adjacent to each other while being electrically connected in series, each of the compartments comprising:
- at least one first electrically conductive substrate (4) acting as the current collector comprising two faces (40, 41), wherein a first face (41) supports an electrode according to at least one pattern (1) and the second face (40) supports an electrode according to two patterns (1, 10) at a mutual distance defining an area (42) devoid of patterns, wherein one (1) of the two patterns of the second face is supported in the same area as the pattern (1) of the first face and the first substrate is bent at the area devoid of patterns so as to obtain a U shape with one pattern from the first face opposite one pattern from the second face;
- at least one second electrically conductive substrate (4') acting as the current collector comprising two faces (40', 41'), wherein a first face (41') supports an electrode according to at least one pattern (2) and the second face (40') supports an electrode according to two patterns (2, 20) at a mutual distance defining an area (42') devoid of patterns, wherein one (2) of the two patterns of the second face is supported in the same area as the pattern (2) of the first face and the second substrate is bent at the area devoid of patterns so as to obtain a U shape with one pattern from the first face opposite one pattern from the second face,
- an electrically insulating separator (3) impregnated with an electrolyte and bent according to an accordion shape nested in each of the U shapes of the first and second substrates which are in turn nested in each other, such that said separator impregnated with electrolyte is in contact with each of the electrode patterns (1, 10, 2, 20);
wherein, for each of the compartments (C1, C2, C3, C4; C5, C6), at least one of the first and second substrates forming the end substrates (4e, 4'e) has a face with precisely one electrode pattern (1, 2),
wherein, for each of the compartments, the electrode patterns of the same substrate have the same polarity;
wherein, for each of the compartments, the electrode patterns of the second substrate (4') have the opposite polarity of those of the electrode of the first substrate (4);
wherein all the first (4) or second substrates of one of the compartments (C1 to C6) are in continuous electrical contact with material continuity with all the second (4') or first substrates of another of the adjacent compartments (C6 to C1) respectively, via the areas thereof devoid of electrode (42, 42') forming the base of the U shapes; wherein the electrode (1, 10) of the substrates (4) of one compartment, in continuous electrical contact, have the opposite polarity of those (2, 20) of the substrates (4') of the other adjacent compartment, in continuous electric contact, thus defining a bipolar current collector;
the battery further comprising an electrically insulating seal (J) arranged on each peripheral edge of each compartment not coated with a substrate or with the continuous electrical contact area (5, 50, 42, 42') with material continuity between substrates, so as to seal the electrolytes and isolate the compartments from the ambient air.

2. Bipolar Li-ion electrochemical battery according to claim 1, wherein the electrically insulating seal (J) consists of a resin or an adhesive.

3. Bipolar Li-ion electrochemical battery according to claim 1 or 2, comprising:
- two end current collectors each consisting of a strip, including one (6) connected to the face of an end substrate (4e) of one compartment (Ci) adjacent with one other compartment (Ci+1) and comprising a single electrode pattern and the other (7) to the face of an end substrate (4'e) of the other compartment (Ci+1) adjacent with one other compartment and comprising a single electrode pattern, wherein the electrode patterns connected to one of the two strips have the opposite polarity to those of the electrode connected to the other strip;
- a flexible container (8) arranged to contain the compartments tightly while being traversed by a portion of the strips (6, 7) acting as a battery charge pole.

4. Bipolar Li-ion electrochemical battery according to claim 1 or 2, comprising:
- two end current collectors each consisting of a strip, including one (6) connected to the face of the end substrate (4e) of one compartment (Ci) adjacent with one other compartment (Ci+1) and comprising a single electrode pattern and the other (7) to the face of the end substrate (4'e) of the other compartment adjacent with one other compartment and comprising a single electrode pattern, wherein the electrode patterns connected to one of the two strips have the opposite polarity to those of the electrode connected to the other strip;
- an electrically insulating film (90) coating the free faces of each compartment while being traversed by a portion of the strips;
- a rigid metallic container (9) acting as a housing arranged to contain the compartments coated by the electrically insulating film(s), wherein the strips are each connected to a contact (91, 92) protruding from the metallic housing each acting as one of the battery charge poles and one (91) of the poles is electrically insulated from the metallic housing by a further electrically insulating seal (93) arranged in an annular manner relative to said contact.

5. Bipolar Li-ion electrochemical battery according to any of the above claims, wherein each substrate acting as a current collector (4, 4') is a metallic strip or grid with at least one face covered with a metallic strip and/or is made of aluminium or copper.

6. Bipolar Li-ion electrochemical battery according to any of the above claims, wherein all the compartments (C1, C2; C1 to C4, C5, C6) are identical to each other.

7. Bipolar Li-ion electrochemical battery according to any of the above claims, wherein each separator is a microporous film, such as polyolefin, ceramics or PVDF type polymer.

8. Bipolar Li-ion electrochemical battery according to any of the above claims, wherein all the negative lithium insertion material-based electrode patterns (2, 20) are based on Li₄Ti₅O₁₂ and all the positive lithium insertion material-based electrode patterns (1, 10) are based on LiFePO₄.

9. Bipolar Li-ion electrochemical battery according to any of the above claims, wherein each electrolyte is a carbonated electrolyte containing a lithium salt, such as LiPF₆.

10. Method for producing a bipolar Li-ion electrochemical battery (A, A1, A2) comprising at least two electrochemical compartments (C1, C2; C1 to C4; C5, C6) arranged adjacent to each other while electrically connected in series, whereby the following steps are carried out:
A/ for each electrochemical compartment, steps a/ to f/ hereinafter at least once:
a/ depositing, on a first face (41) of an electrically conductive substrate (4) acting as the current collector, at least one electrode pattern (1) and, on a second face (40) of the first substrate opposite the first face, two electrode patterns (1, 10) having the same sign as the pattern of the first face, wherein the two patterns (1, 10) are at a mutual distance defining an area devoid of patterns and one (1) of the two patterns of the second face is deposited in the same area as the pattern (1) of the first face;
b/ bending the first electrically conductive substrate (4) so as to shape same substantially into a U shape;
c/ implementing steps a/ and b/ with a second electrically conductive substrate (4') acting as a current collector and depositing three electrode patterns (2, 20) having the opposite polarity to those deposited on the first substrate; the dimensions of the first (4) and second (4') substrates after bending being substantially equal to each other;
d/ bending an electrically insulating separator (3) so as to shape same substantially into an accordion shape,
e/ nesting the separator (3) after bending into the first and second substrates, each after bending and nesting in each other such that the accordion-shaped separator fits closely to each electrode pattern (1, 10; 2, 20) and the peripheral edges of the substrates;
f/ producing seals (J) on the peripheral edges of the end substrates of the compartment and on one of the peripheral edges of the substrates not surrounded by the bent substrates, wherein step f/ is carried out once the separator (3) has been impregnated with an electrolyte;
B/ providing continuous electrical contact with material continuity of all the (4) first or second substrates of one of the compartments with all the second (4') or first of the substrates of another adjacent compartment respectively via the areas (42, 42') thereof devoid of patterns forming the base of the U shapes, wherein the electrode patterns (1, 10) of the substrates (4) of one compartment, in continuous electrical contact, have the opposite polarity of those (2, 20) of the substrates (4') of the other adjacent compartment, in continuous electric contact, thus defining a bipolar current collector.

11. Production method according to claim 10, whereby a separator is impregnated with the electrolyte before performing the step A-f/.

12. Production method according to claim 10 or 11, whereby the steps for depositing active layers of the electrode patterns on the electrically conductive substrate are performed by means of coating.

13. Production method according to any of claims 10 to 12, whereby step B/ for providing the continuous electrical contact is carried out by electric welding or by laser welding.

14. Production method according to any of claims 10 to 12, whereby the step B/ for providing the continuous electrical contact is carried out by means of a metal cladding technique between current collector substrates.

15. Production method according to any of claims 13 or 14, whereby step B/ is carried out using an intermediate metallic sheet between the two current collector substrates placed in continuous electrical contact.
